# EUROPÄISCHE PATENTSCHRIFT

(11) **EP 1 807 843 B1**
(45) Veröffentlichungstag und Bekanntmachung des Hinweises auf die Patenterteilung: **31.12.2008**
(21) Anmeldenummer: 06762956.8
(22) Anmeldetag: 03.08.2006
(51) Int. Cl.: G21F 9/04, G21F 9/12, C02F 1/461

(54) **VERFAHREN ZUM REINIGEN VON WÄSSERN NUKLEARTECHNISCHER ANLAGEN**
METHOD FOR PURIFYING WATER OF NUCLEAR INSTALLATIONS
PROCEDE DE PURIFICATION D'EAU PROVENANT D'INSTALLATIONS NUCLEAIRES

(30) Priorität: 12.08.2005 DE 102005038415
(43) Veröffentlichungstag der Anmeldung: 18.07.2007
(73) Patentinhaber: AREVA NP GmbH, 91052 Erlangen (DE)
(72) Erfinder: REITZNER, Uve, 91058 Erlangen (DE); SCHNEIDER, Volker, 91096 Möhrendorf (DE); TISCHLER, Waldemar, 91056 Erlangen (DE)
(74) Vertreter: Mörtel, Alfred
(86) Internationale Anmeldenummer: PCT/EP2006/007674
(87) Internationale Veröffentlichungsnummer: WO 2007/019960

(56) Entgegenhaltungen:
- FR-A1- 2 746 207
- GB-A- 783 590
- US-A- 5 632 885
- US-A1- 2003 132 104
- US-H1- H1 948

## Beschreibung

Die Erfindung betrifft ein Verfahren zum Reinigen von Wässern nukleartechnischer Anlagen. In bestimmten Bereichen von nukle-artechnischen Anlagen, etwa dem Lagerbecken für abgebrannte Brennelemente, einem Wasserreservoir im Strahlungsbereich des Reaktors und im Primärkühlkreislauf, sofern dort eine Möglichkeit zur Aufprägung eines Wasserstoff-Überschusses nicht vorgesehen ist, entsteht durch strahleninduzierte Radiolyse von Wassermolekülen u.a. Wasserstoffperoxid. Wird Wasser aus einem der genannten Bereiche zur Reinigung über einen Ionenaustauscher geführt, wird das darin enthaltene Ionentauschermaterial, in der Regel handelt es sich hier um Ionentauscherharze, oxidiert und dadurch ihre Wirksamkeit und Lebensdauer beein-trächtigt. Nicht mehr wirksames Austauschermaterial muss entsorgt werden, was auf Grund der Tatsache, dass es sich um strahlendes Material handelt, aufwändig und teuer ist. Dazu kommt ein weiteres Problem, bestehend aus dem Übergang von aus der Oxidation resultierenden Zersetzungsprodukten der Ionentauscherharze in das durchströmende Wasser, das dadurch verunreinigt wird. Es wurden schon in der Vergangenheit verschiedene Versuche unternommen, hier Abhilfe zu schaffen. Probleme bereitet vor allen Dingen der auf Grund der großen zu reini-genden Wassermengen hohe Durchsatz. Die Ionentauscher werden in der Regel mit einem Wasserdurchsatz von 5 bis 20 kg/s beaufschlagt. Eine Zerstörung des Wasserstoffperoxids durch Bestrahlung mit UV-Licht bereitet schon aus diesem Grunde Schwierigkeiten insofern, als bei den vorherrschenden Strömungsgeschwindigkeiten die erforderliche Strahlungsdichte nur mit erheblichen technischen Aufwand zu erreichen wäre. Eine weitere Möglichkeit bestünde in der Zudosierung von Wasserstoff, die aber ebenfalls mit hohen Aufwand verbunden ist und die ohne katalytische Unterstützung in den genannten Anwen-dungsbeispielen zu langsam und unvollständig erfolgt.

Aus GB 783 590 A ist es bekannt, oxidierend wirkende Substanzen wie Wasserstoffperoxid, die zu einem Abbau des Harzmaterials von Ionentauschern führen würden, mittels eines Platinme-tall-Katalysators katalytisch zu zersetzen. Eine ebensolche Vorrichtung ist auch aus US H1948 H bekannt. Eine ähnliche Vorrichtung, jedoch mit einem Aktivkohle-Katalysator offenbart auch US 5 632 885 A. Aus US 2003/132104 A1 ist weiterhin eine Vorrichtung bekannt, die ein in der Zuleitung zu einem Ionentauscher angebrachtes Katalysatormodul mit einem Katalysator aus einem Platinmetall aufweist. Die genannten Vorrichtungen sind jedoch nicht für den Einsatz zum Reinigen nuklearer Abwässer bestimmt. Ein Verfahren zur Zersetzung von organischem radioaktiven Abfall unter Verwendung von Wasserstoffperoxid ist aus FR 2 746 207 A1 bekannt. Hier jedoch erfolgt keine Beseitigung des für einen Ionentauscher schädlichen Wasserstoffperoxids.

Aufgabe der Erfindung ist es, ein Verfahren und eine Vorrichtung zur Reinigung von Wässern nukleartechnischer Anlagen vorzuschlagen, mit denen auf technisch einfache Weise ein zuverlässiger Schutz der zum Reinigen eingesetzten Ionenaustauscher möglich ist.

Diese Aufgabe wird hinsichtlich eines Verfahrens durch Anspruch 1 und hinsichtlich einer Vorrichtung durch Anspruch 4 gelöst. Gemäß Anspruch 1 wird ein Verfahren vorgeschlagen, bei dem zu reinigendes Wasser, bevor es über den Ionentauscher geführt wird, von darin enthaltenem Wasserstoffperoxid katalytisch befreit wird. Eine katalytische Umsetzung von Wasserstoffperoxid ist mit geringstem technischem Aufwand durchzuführen, erfordert wenig Personaleinsatz und wenig Wartungsaufwand und liefert als Endprodukt Wasser und Sauerstoff. Eine katalytisch wirkende Vorrichtung, die vorzugsweise katalytisch beschichtete oder aus katalytisch wirksamen Material bestehende Strukturen umfasst, ist auf lange Sicht wirksam, ohne dass eine regelmäßige Regeneration oder andere Wartungsmaßnahmen erforderlich sind. Sie besitzt außerdem eine hohe Flächenwirksamkeit und dadurch geringe Abmessungen. Sie ist dadurch vor allen Dingen auch für die Nachrüstungen bestehender Ionentauscher-Anlagen geeignet. Es ist weder eine Zugabe von Hilfs-stoffen in das zu behandelnde Wasser erforderlich, noch gibt eine Katalysatoreinrichtung Substanzen an das zu behandelnde Wasser ab. Vorteilhaft ist weiterhin, dass keinerlei Veränderungen der Werkstoffoberfläche des betroffenen Systems selbst nötig ist. Die katalytische Vorrichtung arbeitet ohne Energiezufuhr, und weitgehend reparaturunabhängig. Vorzugsweise werden als Strukturen im Wesentlichen in Strömungsrichtung ausgerichtete dünne Bleche verwendet. Durch eine solche Ausgestaltung wird verhindert, dass im zu reinigenden Wasser Turbulenzen entstehen, die zu einem erhöhten Druckverlust führen.

Bei einer bevorzugten Vorrichtung zur Durchführung des vorgeschlagenen Verfahrens ist gemäß Anspruch 4 vorgesehen, dass in der an den Ionentauscher angeschlossenen Zuleitung mehrere hintereinander geschaltete Katalysatormodule angeordnet sind. Eine Zuleitung hat in aller Regel eine ausreichende Länge, um je nach Anwendungsfall eine ausreichende Zahl von Katalysatormodulen unterbringen zu können. Einsatz und Fixierung der Katalysatormodule ist in einfacher Art und Weise möglich. Vorteilhaft ist dabei auch, dass keine separate Behandlungsstation, etwa ein mit einer Katalysatorstruktur oder einer katalytisch wirksamen Schüttung gefüllter Behälter erforderlich ist. Besonders vorteilhaft ist, dass bereits bestehende Ionentauscher-Anlagen auf einfache Weise nachrüstbar sind. Ein Katalysatormodul setzt sich aus einer Hülse mit einer darin angeordneten Katalysatörstruktur zusammen. Dabei ist die Katalysatorstruktur aus einer Vielzahl von sich Strömungsrichtung erstreckenden Katalysatorblechen gebildet. Dadurch steht für die katalytische Umsetzung des Wasserstoffperoxids eine große Oberfläche zur Verfügung. Für die Katalysatorkonstruktion kann bezüglich einer vergrößerten bzw. maximalen wirksamen Oberfläche und alternativ zusätzlich zur Erhöhung der mechanischen Stabilität z.B. eine gewellte oder in sich gekrümmte Form gewählt werden bzw. eine Kombination aus beidem. Dies kann z.B. dadurch erreicht werden, dass in einem von zwei Blechen umgrenzten Zwischenraum ein Wellblech angeordnet ist.

Die Erfindung wird nun unter Bezugnahme auf die beigefügten Zeichnungen näher erläutert. Es zeigen:

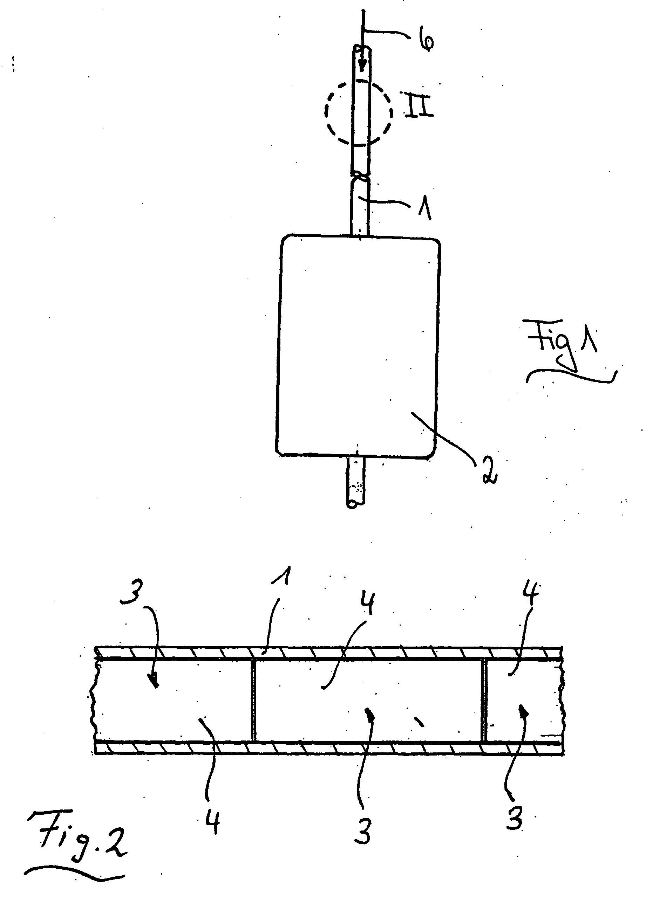

- Fig. 1: eine schematische Darstellung eines Ionenaustauschers mit einer daran angeschlossenen Zuleitung mit darin befindlichen Katalysatormodulen,
- Fig. 2: den Ausschnitt II von Fig. 1,

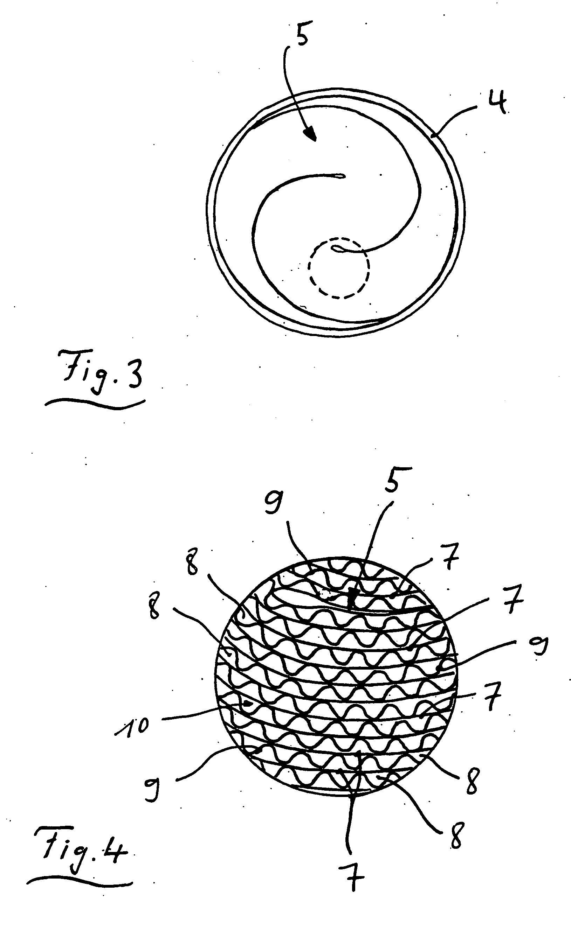

- Fig. 3: die Draufsicht auf die Stirnseite eines Katalysatormoduls,
- Fig. 4: den Ausschnitt IV aus Fig. 3.

Zur Durchführung der Reinigung beispielsweise des in einem Lagerbecken eines Kernkraftwerks befindlichen Wassers wird dieses über eine Zuleitung 1 einem Ionentauscherfilter 2 zugeführt. In diesem kann eine Schüttung bestehend aus kugelförmigen Ionentauscherharzen vorhanden sein, wobei separate Kationen- und Anionentauscherfilter hintereinander geschaltet sein können. Es können auch Mischbettfilter mit Kationen- und Anionentauscherharz in Schichtung oder inniger Vermischung sowie Kombinationen aus Einzel- und Mitschbettfiltern vorhanden sein. Ebenso kann es sich um Ionentauscherfilter mit einer Anschwemmung aus pulverförmigen Ionentauscherharzen (Mischung aus Kationen- und Anionentauschermaterial) handeln.

Um im Wasser enthaltenes Wasserstoffperoxid auf eine einfache und im Hinblick auf bereits bestehende Anlagen leicht nachrüstbare Art zu entfernen, sind in einem sich vor dem Ionentauscher 2 befindlichen Abschnitt der Zuleitung 1 eine gewählte Anzahl von Katalysatormodulen 3 angeordnet. Ein Katalysatormodul ist im wesentlichen von einer insbesondere aus VA-Stahl bestehenden Hülse 4 und einer darin angeordneten Katalysatorstruktur 5 gebildet. Der Außendurchmesser der Hülse 4 ist geringfügig kleiner als der Innendurchmesser der Zuleitung 1, so dass die Hülsen mit einer einfachen Halterung ohne Anschweißung in der Zuleitung 1 angeordnet werden können. Ein Katalysatormodul 3 lässt sich somit auch nachträglich in die Zuleitung bereits bestehender Reinigungsanlagen einbauen. Dazu werden die Katalysatormodule 3 entweder, gegebenenfalls mit Hilfe zusätzlicher Flanschpaare, in die vorhandene Zuleitung eingebracht oder es wird ein Bereich der Zuleitung durch einen Abschnitt ersetzt, welcher Katalysatormodule 3 enthält.

Die Katalysatorstruktur 5 weist beispielhaft eine Vielzahl von sich in Längsrichtung der Zuleitung 1 bzw. in Strömungsrichtung 6 erstreckenden Blechzuschnitten 7 auf. Die Blechzuschnitte 7 schließen beispielhaft einen Zwischenraum 8 ein, in dem jeweils ein Wellblech 9 angeordnet ist. Auf diese Weise ist der Innenquerschnitt der Hülse 4 in eine große Anzahl von Strömungskanälen 10 unterteilt. Auch die Wellblechzuschnitte 9 erstrecken sich in Strömungsrichtung 6, so dass die Katalysatorstruktur 5 dem die Zuleitung 1 durchströmenden Wasser einen niedrigen Widerstand entgegensetzt. Dies beruht u.a. darauf, dass die auf die beschriebene Art gestaltete Katalysatorstruktur 5 die laminare Strömung des Wassers in der Zuleitung 1 nicht stört und dadurch widerstandserhöhende Turbulenzen vermieden werden. Aufgrund der sehr hohen Zahl von Strömungskanälen 10 wird eine entsprechend hohe Fläche für die katalytische Umsetzung des Wasserstoffperoxids geschaffen. Die Blechzuschnitte 7 und die Wellblechzuschnitte 9 sind mit Platin als katalytischem Material beschichtet. Die katalytisch wirksame Oberfläche kann noch dadurch vergrößert werden, dass mikroporöses Platinmaterial auf die Blechzuschnitte 7 und Wellblechzuschnitte 9 aufgebracht ist. Beispielhaft wird bei einem Durchsatz der die Katalysatormodule 3 enthaltenen Zuleitung 1 von etwa 7 kg / s und einem Rohrdurchmesser der Zuleitung 1 von etwa 300 mm, die Zuleitung 1 auf einer Strecke von etwa 2,5 m mit Katalysatormodulen 3 bestückt, um eine Zersetzung des darin mit einer Konzentration von etwa 15 mg/l enthaltenen Wasserstoffperoxids zu gewährleisten.

### Bezugszeichenliste

- 1: Zuleitung
- 2: Ionentauscher
- 3: Katalysatormodul
- 4: Hülse
- 5: Katalysatorstruktur
- 6: Strömungsrichtung
- 7: Blechzuschnitt
- 8: Zwischenraum
- 9: Wellblechzuschnitt
- 10: Strömungskanal

## Patentansprüche

1. Verfahren zum Reinigen von Wässern nukleartechnischer Anlagen, bei dem das Wasser mit einen Ionentauscher (2)gereinigt wird, wobei das Wasser zur Zersetzung von darin enthaltendem Wasserstoffperoxid über dem Ionentauscher (2) vorgeschaltete Strukturen geleitet wird, welche von im Wesentlichen in Strömungsrichtung ausgerichteten, mit einem katalytisch wirksamen Material beschichteten oder aus einem solchen Material bestehenden Blechzuschnitten (7, 9) gebildet sind.

2. Verfahren nach Anspruch 1,
**dadurch gekennzeichnet, dass** als katalytisch wirksames Material ein Element oder Elementgemische aus der Platingruppe verwendet wird.

3. Verfahren nach Anspruch 2,
**dadurch gekennzeichnet, dass** als katalytisch wirksames Material Platin verwendet wird.

4. Vorrichtung zur Durchführung eines Verfahrens nach einem der vorhergehenden Ansprüche, mit einem Ionentauscher (2) und einer an diesen angeschlossenen Zuleitung (1), wobei innerhalb der Zuleitung (1) mehrere hintereinander geschaltete Katalysatormodule (3) angeordnet sind und ein Katalysatormodul (3) aus einer Hülse (4) und einer Vielzahl von darin fixierten, sich in Strömungsrichtung (6) erstreckenden und jeweils einen Zwischenraum (8) zwischen sich einschließenden Blechzuschnitten (7) gebildet ist.

5. Vorrichtung nach Anspruch 4,
**dadurch gekennzeichnet, dass** in einem von zwei Blechzuschnitten (7) umgrenzten Zwischenraum (8) jeweils ein Wellblechzuschnitt (9) angeordnet' ist.

6. Vorrichtung nach Anspruch 4 oder 5,
**dadurch gekennzeichnet, dass** die Blechzuschnitte (7, 9) mit einem Metall oder Metallgemisch der Platingruppe beschichtet sind.

7. Vorrichtung nach Anspruch 6,
**dadurch gekennzeichnet, dass** die Blech- und Wellblechzuschnitte (7, 9) mit Platin beschichtet sind.

## Claims

1. Method for purifying water of nuclear installations, in the case of which the water is purified with the aid of an ion exchanger (2), the water being led, in order to decompose hydrogen peroxide contained in it, over structures upstream of the ion exchanger (2) that are formed by sheet-metal blanks (7, 9) that are aligned substantially in the direction of flow, are coated with a catalytically active material, or consist of such a material.

2. Method according to Claim 1, **characterized in that** an element or a mixture of elements from the platinum group is used as catalytically active material.

3. Method according to Claim 2, **characterized in that** platinum is used as catalytically active material.

4. Device for carrying out a method according to one of the preceding claims, having an ion exchanger (2) and a feed line (1) connected to the latter, a number of series-connected catalyst modules (3) being arranged within the feed line (1) and a catalyst module (3) being formed from a sleeve (4) and a multiplicity of sheet-metal blanks (7) that are fixed therein, extend in the direction of flow (6) and respectively enclose an interspace (8) between them.

5. Device according to Claim 4, **characterized in that** a corrugated sheet-metal blank (9) is respectively arranged in an interspace (8) bounded by two sheet-metal blanks (7).

6. Device according to Claim 4 or 5, **characterized in that** the sheet-metal blanks (7, 9) are coated with a metal or metal mixture of the platinum group.

7. Device according to Claim 6, **characterized in that** the sheet- and corrugated sheet-metal blanks (7, 9) are coated with platinum.

## Revendications

1. Procédé de purification des eaux de centrales nucléaires, dans lequel l'eau est purifiée avec un échangeur ionique (2), moyennant quoi l'eau est guidée à des fins de décomposition du peroxyde d'hydrogène qu'elle contient au moyen de l'échangeur ionique (2) dans des structures disposées en amont, lesquelles sont formées par des pièces de tôle découpées (7,9) essentiellement alignées dans la direction d'écoulement, revêtues d'un matériau à action catalytique ou constituées d'un tel matériau.

2. Procédé selon la revendication 1, **caractérisé en ce que** comme matériau à action catalytique, on utilise un élément ou un mélange d'éléments du groupe du platine.

3. Procédé selon la revendication 2, **caractérisé en ce que** comme matériau à action catalytique, on utilise du platine.

4. Dispositif pour mettre en oeuvre un procédé selon une des revendications précédentes, comportant un échangeur ionique (2) et une conduite d'amenée (1) raccordée à celui-ci, moyennant quoi plusieurs modules catalyseurs (3) branchés les uns derrière les autres sont disposés à l'intérieur de la conduite d'amenée (1) et un module catalyseur (3) est formé par une douille (4) et une pluralité de pièces en tôle découpées (7) qui y sont fixées, s'étendant dans la direction d'écoulement (6) et définissant entre elles un espace intermédiaire (8) respectif.

5. Dispositif selon la revendication 4, **caractérisé en ce que** une pièce de puits en tôle découpée (9) est respectivement disposée dans un espace intermédiaire (8) bordé par deux pièces en tôle découpée (7).

6. Dispositif selon la revendication 4 ou 5, **caractérisé en ce que** les pièces en tôle découpée (7,9) sont revêtues d'un métal ou d'un mélange de métaux du groupe du platine.

7. Dispositif selon la revendication 6, **caractérisé en ce que** les pièces en tôle découpée et pièces de puits en tôle découpée (7,9) sont revêtues de platine.
